# DEMANDE DE BREVET EUROPEEN

(11) **EP 4 596 262 A1**
(43) Date de publication de la demande: **06.08.2025**
(21) Numéro de dépôt: 25154946.5
(22) Date de dépôt: 30.01.2025
(51) Int. Cl.: B60C 23/00, F16K 3/24, F16K 11/10

(54) **VANNE PERFECTIONNÉE POUR LE TÉLÉGONFLAGE D'UN PNEUMATIQUE D'UNE ROUE DE VÉHICULE ET VÉHICULE COMPRENANT UN SYSTÈME DE TÉLÉGONFLAGE COMPRENANT AU MOINS UNE TELLE VANNE**

(30) Priorité: 01.02.2024 FR 2400924
(71) Demandeur: KNDS France Mechanics, 78000 Versailles (FR)
(72) Inventeur: GOYER, Stéphane, 18023 BOURGES (FR); BOYER, Nathanaël, 18023 BOURGES (FR)
(74) Mandataire: Cabinet Chaillot

(57) **Abrégé**

L'invention concerne une vanne (1) pour le télégonflage d'un pneumatique d'une roue de véhicule, un réservoir apte à stocker un gaz sous pression étant embarqué dans la roue, la vanne (1) comportant un orifice d'admission (5) d'une pression de pilotage destiné à être relié à une source de pression, un orifice de gonflage-dégonflage (7) destiné à être relié à un pneumatique, un orifice d'échappement (8) destiné à être relié à l'extérieur de la vanne (1) et un orifice de mise en communication avec le réservoir (6) destiné à être relié au réservoir, la vanne (1) comprenant des moyens de pilotage sensibles à la pression (9a-9c, 10a-10c, 49) configurés et agencés pour être aptes à être déplacés sous l'effet de la pression de pilotage de façon à adopter une position de repos, une position de gonflage et une position de dégonflage, caractérisée par le fait que lesdits moyens de pilotage sensibles à la pression sont également configurés et agencés pour adopter une position de remplissage de réservoir.

## Description

Le domaine technique de l'invention est celui du télégonflage, et en particulier du télégonflage d'un pneumatique d'une roue équipée d'un réservoir de gaz sous pression.

Une telle roue équipée d'un réservoir de gaz sous pression est notamment décrite dans le brevet français FR2879128.

La présente invention concerne une vanne pour le télégonflage d'un pneumatique d'une roue de véhicule, laquelle roue est équipée d'un réservoir de gaz sous pression, et un véhicule automobile comprenant un système de télégonflage comprenant au moins une telle vanne.

De manière générale, les systèmes de télégonflage permettent de modifier la pression interne des pneumatiques d'un véhicule directement depuis l'habitacle du véhicule.

L'ajout d'un tel système est particulièrement utile pour des véhicules destinés à rouler sur des sols de natures différentes, notamment susceptibles d'alterner entre des phases de circulation dans un champ, où des pressions basses sont recommandées pour une bonne adhérence et un patinage réduit, et des phases de circulation sur route, où des pressions plus élevées sont nécessaires, à la fois pour la tenue des pneus, l'efficacité de la motricité et le bon contrôle des trajectoires.

Un tel système est également utile pour des véhicules susceptibles de transporter différentes charges et/ou susceptibles de se déplacer à différentes vitesses.

En permettant de faire varier la pression des pneumatiques pour s'adapter aux revêtements sur lesquels le véhicule se déplace, aux charges qu'il transporte et à la vitesse de déplacement du véhicule, un tel système de télégonflage permet de réduire l'usure des pneumatiques ainsi que la consommation de carburant du véhicule, permettant des économies substantielles et une réduction de l'impact environnemental de l'exploitation.

Les systèmes de télégonflage sont donc utiles dans de nombreux champs d'application, notamment dans les véhicules agricoles, militaires, civils ou encore de types rallyes. L'application la plus courante concerne les tracteurs agricoles, mais les véhicules tous terrains en général sont concernés par ce type de système.

Il existe de nombreux systèmes de télégonflage comprenant des vannes simples et, éventuellement, des joints tournants, pour alimenter en air les pneumatiques des roues avec un compresseur embarqué. De tels systèmes sont notamment divulgués dans les brevets français FR2872087 et FR3020597.

Cependant, avec de tels systèmes de télégonflage, le temps nécessaire au gonflage et dégonflage d'un pneumatique est important, et peut notamment dépasser les 15 minutes quand il s'agit d'un pneumatique agricole.

Or, il est souhaitable que l'adaptation de la pression en fonction de l'état du terrain parcouru, de la charge transportée et de la vitesse du véhicule soit quasi-instantanée.

A cet effet, il existe des systèmes de télégonflage comprenant un réservoir d'air sous pression embarqué sur la roue du véhicule et une vanne spécifique permettant d'injecter dans le pneumatique l'air sous pression contenu dans le réservoir.

Un tel système de télégonflage est notamment divulgué dans le brevet français FR3086577. En particulier, la vanne spécifique décrite dans ce brevet FR3086577 est une vanne quatre voies propre à prendre plusieurs positions, dans lesquelles elle relie fluidiquement deux éléments parmi la vanne de sortie du réservoir, le volume interne du pneumatique et l'extérieur du pneumatique. Ainsi, la vanne 4 voies permet, selon sa position, soit d'augmenter la pression dans le pneumatique soit de réduire la pression dans le pneumatique. La vanne 4 voies est également apte à mesurer les pressions internes respectives du pneumatique ou du réservoir par la mise en communication du pneumatique ou du réservoir avec un capteur de pression. Ce système comprend en outre une vanne d'entrée permettant de relier fluidiquement le réservoir à un compresseur d'air porté par le véhicule afin de permettre le remplissage du réservoir.

Ce système présente l'avantage de permettre de stocker de l'air en surpression dans le réservoir de la roue et ainsi d'augmenter très rapidement la pression dans les pneumatiques lorsqu'un ajustement est requis. En d'autres termes, un tel système permet de réduire considérablement le temps de gonflage d'un pneumatique.

Toutefois, la vanne spécifique décrite dans ce brevet FR3086577 ne permet pas de piloter, à la fois le gonflage et le dégonflage du pneu et le remplissage du réservoir.

C'est donc le but de la présente invention que de proposer une vanne spécifique, pilotée par la pression, apte à assurer les fonctions de gonflage et de dégonflage ainsi que la fonction de remplissage du réservoir.

La solution selon la présente invention repose donc sur vanne perfectionnée permettant, en fonction d'une pression de pilotage, soit de remplir le réservoir avec de l'air sous pression fourni par une source de pression du véhicule, telle qu'un compresseur, soit de gonfler le pneumatique en libérant l'air sous pression du réservoir, soit de dégonfler le pneumatique.

L'invention a ainsi pour objet une vanne perfectionnée pour le télégonflage d'un pneumatique d'une roue de véhicule, un réservoir apte à stocker un gaz sous pression étant embarqué dans la roue, la vanne étant destinée à être interposée entre une source de pression apte à générer une pression de pilotage et la roue, la vanne comportant quatre orifices, à savoir un orifice d'admission de la pression de pilotage destiné à être relié à la source de pression, un orifice de gonflage-dégonflage destiné à être relié au volume intérieur du pneumatique, un orifice d'échappement destiné à être relié à l'extérieur de la vanne et un orifice de mise en communication avec le réservoir destiné à être relié au réservoir, la vanne comprenant, dans un corps muni desdits quatre orifices, des moyens de pilotage sensibles à la pression configurés et agencés pour être aptes à être déplacés sous l'effet de la pression de pilotage de façon à adopter : - une position de repos dans laquelle les moyens de pilotage assurent une obturation des passages entre lesdits orifices ; - une position de gonflage dans laquelle lesdits moyens de pilotage assurent une mise en communication entre l'orifice de mise en communication avec le réservoir et l'orifice de gonflage-dégonflage ; - une position de dégonflage dans laquelle lesdits moyens de pilotage assurent une mise en communication entre l'orifice de gonflage-dégonflage et l'orifice d'échappement ; caractérisée par le fait que lesdits moyens de pilotage sensibles à la pression sont également configurés et agencés pour adopter une position de remplissage de réservoir dans laquelle lesdits moyens de pilotage assurent une mise en communication entre l'orifice d'admission et l'orifice de mise en communication avec le réservoir.

La vanne perfectionnée selon l'invention permet donc de faire transiter le gaz sous pression du réservoir au pneumatique pour le gonflage, tout en permettant d'assurer également des fonctions de remplissage du réservoir et de dégonflage du pneumatique. De plus, la vanne selon l'invention est pilotée par le même flux de gaz que celui qui remplit le réservoir sous pression en position de remplissage.

Dans un mode de réalisation particulier, les moyens de pilotage comprennent des premier, deuxième et troisième ensembles formant piston, chaque ensemble formant piston étant mobile axialement dans un logement en communication fluidique avec l'orifice d'admission de la pression de pilotage via un circuit de pilotage reliant successivement chaque logement audit orifice d'admission, les premier, deuxième et troisième ensembles formant piston étant sensibles, respectivement, à une première, deuxième et troisième pressions de pilotage, la première pression de pilotage étant inférieure à la deuxième pression de pilotage et la deuxième pression de pilotage étant inférieure à la troisième pression de pilotage.

Une telle vanne est donc simple et fiable.

De préférence, les premier, deuxième et troisième ensembles formant piston sont configurés et agencés de telle sorte que, en utilisation, lorsque la première pression de pilotage est délivrée à travers l'orifice d'admission, les ensembles formant piston sont placés dans la position de dégonflage, lorsque la deuxième pression de pilotage est délivrée à travers l'orifice d'admission, les ensembles formant piston sont placés dans la position de gonflage, et lorsque la troisième pression de pilotage est délivrée à travers l'orifice d'admission, les ensembles formant piston sont placés dans la position de remplissage, la troisième pression de pilotage étant la pression de remplissage du réservoir.

De préférence, chaque ensemble formant piston comprend un élément de fermeture ayant une première extrémité axiale fermée, côté circuit de pilotage, et une seconde extrémité axiale ouverte opposée, et un organe de rappel élastique solidaire du corps, côté seconde extrémité axiale, et de l'élément de fermeture, ledit organe de rappel élastique étant associé fonctionnellement à l'élément de fermeture de manière à le rappeler vers la position de repos, la raideur de l'organe de rappel élastique du premier ensemble formant piston, dite première raideur, étant inférieure à la raideur de l'organe de rappel élastique du deuxième ensemble formant piston, dite deuxième raideur, et la deuxième raideur étant inférieure à la raideur de l'organe de rappel élastique du troisième ensemble formant piston, dite troisième raideur.

De préférence, les organes de rappel élastique comportent des ressorts de compression.

De préférence, chaque élément de fermeture est un corps cylindrique creux monté coulissant dans un logement cylindrique, le corps cylindrique creux étant relié au corps de la vanne par une tige axiale apte à être reçue dans le corps cylindrique creux, chaque corps cylindrique creux ayant une forme d'haltère, autrement dit comportant une gorge circonférentielle centrale disposée entre deux portées.

De préférence, les logements dans lesquels sont logés les ensembles formant piston s'étendent parallèlement les uns par rapport aux autres, et perpendiculairement aux axes des quatre orifices.

Avantageusement, les première, deuxième et troisième raideurs sont choisies de telle sorte que la première pression de pilotage est d'environ 1,8 bar, la deuxième pression de pilotage est d'environ 3,4 bars et la troisième pression de pilotage est supérieure ou égale à 6 bars.

De préférence, chaque organe de rappel élastique comporte deux ressorts concentriques et coaxiaux, dont un ressort extérieur et un ressort intérieur, les raideurs des premier, deuxième et troisième ressorts extérieurs étant différentes et les raideurs des premier, deuxième et troisième ressorts intérieurs étant différentes.

Avantageusement, le corps de vanne est un corps en au moins deux parties comprenant un boîtier et un couvercle fixé de manière détachable au boîtier par des organes de fixation amovible, notamment des vis.

Un tel montage du corps de vanne permet d'accéder aisément aux ensembles formant piston.

La présente invention a également pour objet un véhicule automobile comprenant au moins une roue comportant un pneumatique définissant un volume intérieur ; pour la ou chaque roue, un réservoir apte à stocker un gaz sous pression ; et un système de télégonflage comprenant une source de pression portée par le véhicule, caractérisé par la fait que le système de télégonflage comprend en outre, pour la ou chaque roue, une unique vanne telle que définie ci-dessus, dans laquelle vanne l'orifice d'admission est relié à la source de pression, l'orifice de gonflage-dégonflage est relié au volume intérieur du pneumatique, l'orifice d'échappement est relié à l'extérieur de la vanne et l'orifice de mise en communication avec le réservoir est relié au réservoir, le système de télégonflage comprenant en outre un module de pilotage couplé à la ou chaque vanne et à la source de pression.

Ainsi, le véhicule selon l'invention permet de stocker un gaz sous pression dans le réservoir de la ou chaque roue, et de faire varier la pression dans le ou chaque pneumatique ainsi que de remplir le ou chaque réservoir via le pilotage d'une unique vanne pour la ou chaque roue.

La source de pression peut être une source de génération d'air du véhicule ou un compresseur de gaz embarqué.

Le véhicule peut être un véhicule agricole, un véhicule militaire, un véhicule de type rallyes ou un véhicule civil.

De préférence, le module de pilotage comprend un boîtier de distribution électropneumatique relié à un pupitre de commande.

Le pupitre de commande, qui est l'interface entre un utilisateur et le système de télégonflage, peut être agencé dans l'habitacle du véhicule.

Le boîtier de distribution électropneumatique permet de traiter les instructions données par l'utilisateur, notamment le conducteur du véhicule, via le pupitre de commande et de piloter la vanne.

Le pupitre de commande peut être relié au boîtier de distribution électropneumatique par une liaison électrique directe.

De préférence, le système de télégonflage comprend en outre, pour la ou chaque roue, un premier capteur de pression propre à mesurer une pression dans le volume intérieur du pneumatique et un second capteur de pression propre à mesurer une pression dans le réservoir.

Chaque capteur de pression peut transmettre les données de mesure de pression au pupitre de commande par une liaison sans fil.

Un tel système permet à l'utilisateur de gérer la pression dans le ou chaque pneumatique du véhicule depuis l'habitable et d'avoir en permanence la connaissance de la pression du ou des pneumatiques et la pression dans le ou chaque réservoir associé.

La présente invention sera mieux comprise à la lecture de la description suivante d'un mode de réalisation particulier, description faite à la lumière des dessins annexés, dessins dans lesquels :
[Fig. 1] est une vue en perspective éclatée d'une vanne selon l'invention ;
[Fig. 2] est une vue en coupe longitudinale de la vanne selon l'invention, les moyens de pilotage étant en position de repos ;
[Fig. 3] est une vue en coupe longitudinale de la vanne selon l'invention, les moyens de pilotage étant en position de dégonflage ;
[Fig. 4] est une vue en coupe longitudinale de la vanne selon l'invention, les moyens de pilotage étant en position de gonflage ;
[Fig. 5] est une vue en coupe longitudinale de la vanne selon l'invention, les moyens de pilotage étant en position de remplissage du réservoir ; et
[Fig. 6] est une vue schématique d'un véhicule selon l'invention, montrant l'intégration d'un système de télégonflage comprenant au moins une vanne selon l'invention dans un véhicule de type tracteur.

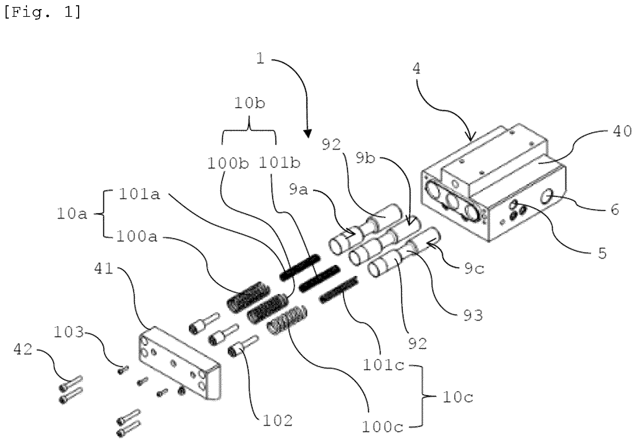

Si l'on se réfère tout d'abord aux Figures 1 à 5, on peut voir que l'on y a représenté une vanne 1 selon un mode de réalisation préféré de la présente invention, laquelle vanne 1 est destinée à être intégrée dans un système de télégonflage S appliqué au réglage de la pression des pneumatiques 2 d'un véhicule V.

La vanne 1 selon la présente invention est particulièrement adaptée à une application dans le domaine civil, en particulier agricole. Toutefois, la vanne 1 peut trouver son application sur un véhicule militaire à roues.

De manière générale, la vanne 1 est destinée à être intégrée à un véhicule V comportant au moins un pneumatique 2 apte à être gonflé et un réservoir 3 apte à stocker un gaz sous pression et associé au pneumatique 2.

La vanne 1 selon la présente invention comprend, un corps de vanne 4 à quatre orifices 5, 6, 7, 8 et, à l'intérieur du corps de vanne 4, des moyens de pilotage sensibles à la pression.

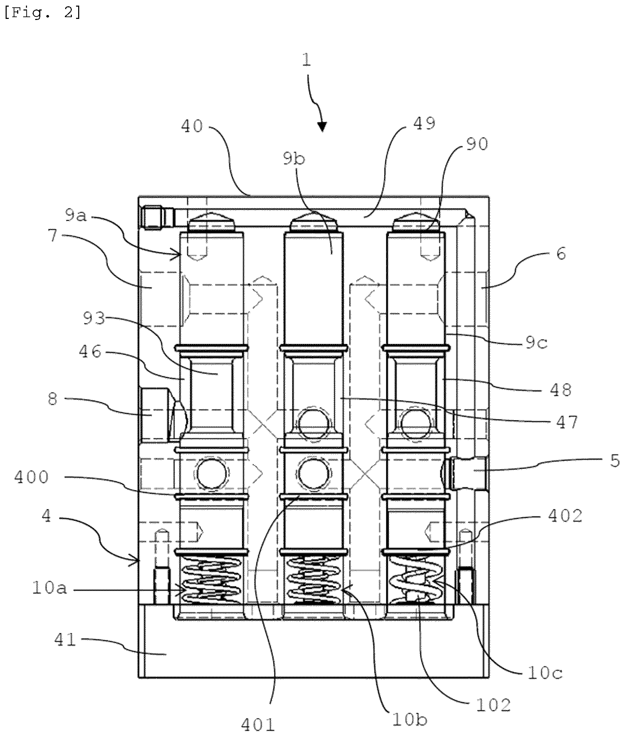

Comme on peut le voir sur les Figures 2 à 5, le corps devanne 4 est un corps creux muni des quatre orifices 5-8, à savoir un orifice d'admission 5, un orifice de mise en communication avec le réservoir 6, un orifice de gonflage-dégonflage 7 et un orifice d'échappement 8.

Ce corps de vanne 4 comprend un boîtier 40 et un couvercle 41 fixé de manière amovible au boîtier 40, notamment au moyen de quatre vis 42. Le boîtier 40 présente une forme de parallélépipède à bases rectangulaires, autrement dit, le boîtier 40 a six parois rectangulaires délimitant un premier espace intérieur. Le couvercle 41 présente une section rectangulaire et a une paroi de fond 41a et quatre parois latérales délimitant entre elles un second espace intérieur.

L'orifice d'admission 5 est destiné à être relié, par une ligne pneumatique, à une source de pression 11 apte à générer une pression de pilotage. L'orifice de gonflage-dégonflage 7 est destiné à être relié, par une ligne pneumatique, au volume intérieur d'un pneumatique 2. L'orifice d'échappement 8 est destiné à déboucher à l'extérieur de la vanne 1. L'orifice de mise en communication avec le réservoir 6 est destiné à être relié, par une ligne pneumatique, au réservoir 3.

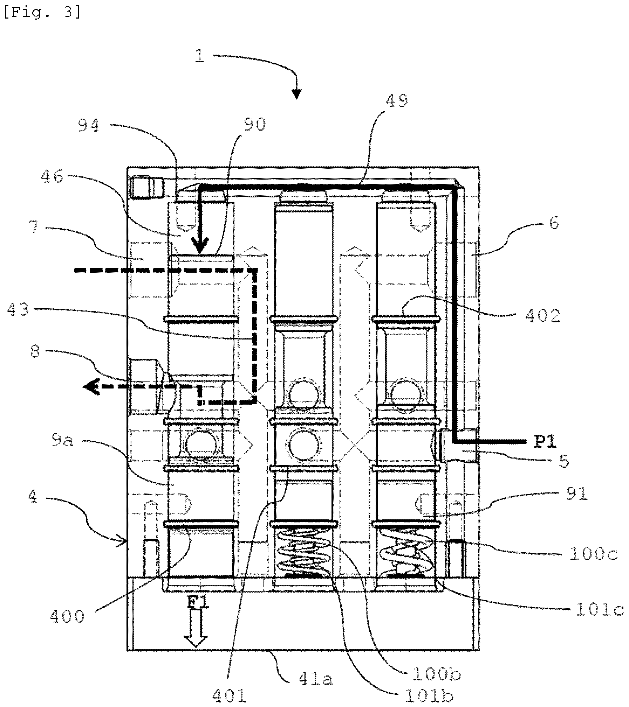

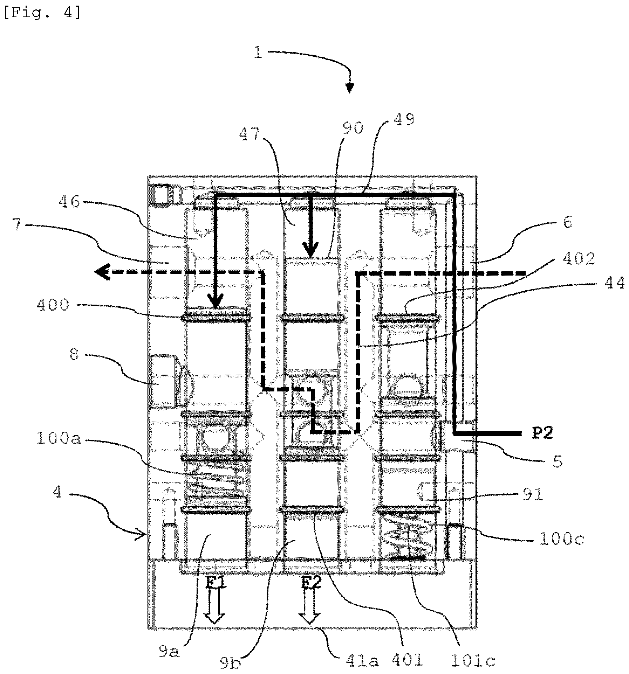

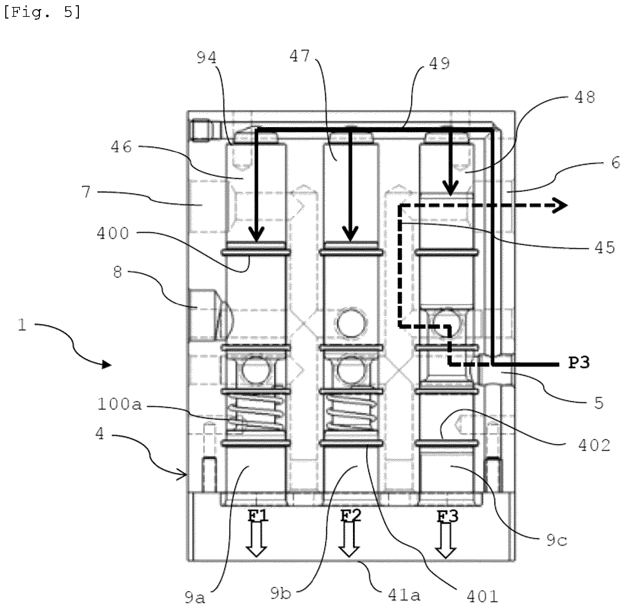

A l'intérieur du corps de vanne 4 sont définis trois passages, à savoir un passage 43 (dont le chemin est représenté en pointillés sur la Figure 3) entre l'orifice de gonflage-dégonflage 7 et l'orifice d'échappement 8, un passage 44 (dont le chemin est représenté en pointillés sur la Figure 4) entre l'orifice de mise en communication avec le réservoir 6 et l'orifice de gonflage-dégonflage 7, un passage 45 (dont le chemin est représenté en pointillés sur la Figure 5) entre l'orifice d'admission 5 et l'orifice de mise en communication avec le réservoir 6.

A l'intérieur du corps de vanne 4 sont également définis des premier 46, deuxième 47 et troisième 48 logements axiaux ayant chacun une première extrémité axiale débouchant dans un passage 49 (dont le chemin est représenté sur les Figures 3 à 5) communiquant avec l'orifice d'admission 5, et une seconde extrémité axiale fermée. Le passage 49 défini entre l'orifice d'admission 5 et chacun des logements 46, 47, 48 est appelé circuit de pilotage 49.

Chaque logement 46, 47, 48 s'étend à travers un orifice prévu dans la paroi du boîtier 40 séparant les premier et second espaces, et jusqu'à la paroi de fond 41a du couvercle 41. Ainsi, la seconde extrémité axiale de chaque logement 46, 47, 48 est fermée par la paroi de fond 41a.

Dans le mode de réalisation représenté, les logements 46, 47, 48 sont cylindriques, les trois logements 46, 47, 48 étant de même longueur et pouvant être de même diamètre ou non. Ces trois logements 46, 47, 48 s'étendent dans un même plan, selon des axes longitudinaux qui sont parallèles entre eux et perpendiculaires à la paroi de fond 41a. Les logements 46, 47, 48 sont régulièrement espacés les uns des autres. Le plan dans lequel sont situés les logements 46, 47, 48 est décalé vis-à-vis du plan passant par le centre de la paroi de fond 41a.

Les quatre orifices 5-8 du corps de vanne 4 sont des orifices circulaires formés dans deux parois opposées du boîtier 40 qui sont perpendiculaires à la paroi de fond 41a. L'axe de chaque orifice 5-8 est orthogonal à l'axe longitudinal de chaque logement 46-48 et s'étend dans un plan parallèle au plan des logements 46-48. Les orifices d'admission 5 et de mise en communication avec le réservoir 6 sont agencés à travers une même paroi du boîtier 40, à savoir la paroi côté premier logement 46, et sont espacés l'un de l'autre sur la longueur de cette paroi et décalés l'un de l'autre sur la largeur de cette paroi. En particulier, l'orifice d'admission 5 est plus proche de la paroi de fond 41a que l'orifice de mise en communication avec le réservoir 6, et l'orifice de mise en communication avec le réservoir 6 se trouve décalé vis-à-vis du plan des logements 46-48. Les orifices de gonflage-dégonflage 7 et d'échappement 8 sont agencés à travers une même paroi du boîtier 40, à savoir la paroi côté troisième logement 48, laquelle paroi est opposée à celle comportant l'orifice d'admission 5. L'orifice de gonflage-dégonflage 7 se trouve en regard de l'orifice de mise en communication avec le réservoir 6. L'orifice d'échappement 8 est espacé de l'orifice de gonflage-dégonflage 7 sur la longueur de cette paroi et est décalé par rapport à celui-ci sur la largeur de cette paroi.

Le passage 43 entre l'orifice de gonflage-dégonflage 7 et l'orifice d'échappement 8 est un passage tubulaire qui traverse le troisième logement 48. Ce passage 43 présente deux coudes à 90 degrés situés dans un même plan ainsi qu'une zone coudée, au niveau du troisième logement 48, permettant de passer du plan de l'orifice de gonflage-dégonflage 7 au plan de l'orifice d'échappement 8. Le passage 44 tubulaire entre l'orifice de mise en communication avec le réservoir 6 et l'orifice de gonflage-dégonflage 7 traverse le deuxième logement 47 et présente quatre coudes à 90 degrés situés dans un même plan, ainsi que deux zones coudées au niveau du deuxième logement 47. Le passage 45 tubulaire entre l'orifice d'admission 5 et l'orifice de mise en communication avec le réservoir 6 traverse le premier logement 46. Ce passage 45 présente deux coudes à 90 degrés situés dans un même plan ainsi qu'une zone coudée, au niveau du premier logement 46, permettant de passer du plan de l'orifice d'admission 5 au plan de l'orifice de mise en communication avec le réservoir 6. Le circuit de pilotage 49 est agencé dans le même plan que celui contenant les axes longitudinaux des logements 46-48.

Les moyens de pilotage sensibles à la pression comprennent trois ensembles formant piston 9a-9c, 10a-10c reçus dans les logements 46-48, ainsi que le circuit de pilotage 49.

Ces moyens de pilotage sont configurés et agencés pour adopter, sélectivement, en fonction d'une pression de pilotage délivrée dans le circuit de pilotage 49 à travers l'orifice d'admission 5, l'une des quatre positions parmi une position de repos (Figure 2) dans laquelle les passages 43-45 entre les orifices 5-8 sont obturés, une position de dégonflage (Figure 3) dans laquelle le passage 43 entre l'orifice de gonflage-dégonflage 7 et l'orifice d'échappement 8 est ouvert, les autres passages 44, 45 entre les orifices étant obturés, une position de gonflage (Figure 4) dans laquelle le passage 44 entre l'orifice de mise en communication avec le réservoir 6 et l'orifice de gonflage-dégonflage 7 est ouvert, les autres passages 43, 45 entre les orifices étant obturés, et une position de remplissage de réservoir (Figure 5) dans laquelle le passage 45 entre l'orifice d'admission 5 et l'orifice de mise en communication avec le réservoir 6 est ouvert, les autres passages 43, 44 entre les orifices étant obturés.

Comme on peut le voir plus particulièrement sur la Figure 1, chaque ensemble formant piston 9a-9c, 10a-10c comprend un élément de fermeture 9a, 9b, 9c et un organe de rappel élastique 10a, 10b, 10c.

Les éléments de fermeture 9a-9c de chacun des ensembles formant piston 9a-9c, 10a-10c sont de même structure, mais leurs diamètres peuvent être différents, en fonction du diamètre des logements 46-48. Chaque élément de fermeture 9a-9c est un corps longitudinal creux en une seule pièce ayant une première extrémité axiale fermée 90 et une seconde extrémité axiale ouverte 91. Ce corps est un corps cylindrique comportant deux portées cylindriques 92 de part et d'autre d'une gorge cylindrique 93. Les deux portées 92 ont un même diamètre extérieur, supérieur au diamètre extérieur de la gorge 93, et sensiblement égal au diamètre du logement 46-48 respectif. Ainsi, l'élément de fermeture 9a-9c est apte à coulisser dans le logement 46-48, le long de l'axe longitudinal du logement 46-48. La course de l'élément de fermeture 9a-9c dans son logement 46-48 est limitée, du côté de sa première extrémité fermée 90, par un siège radial 94 formé entre la paroi latérale du logement 46-48 et le circuit de pilotage 49, et du côté de sa seconde extrémité ouverte 91, par la paroi de fond 41a du couvercle 41. La longueur de l'élément de fermeture 9a-9c est strictement inférieure à la longueur de son logement 46-48. Pour chaque élément de fermeture 9a, 9b et 9c, des éléments d'étanchéité 400, 401 et 402, comme par exemple des joints toriques, sont par ailleurs prévus de façon à assurer une étanchéité entre l'élément de fermeture 9a-9c respectif et le logement 46-48 respectif. On peut par exemple prévoir quatre éléments d'étanchéité 400 pour l'élément de fermeture 9a, quatre éléments d'étanchéité 401 pour l'élément de fermeture 9b, et quatre éléments d'étanchéité 402 pour l'élément de fermeture 9c.

Comme on peut également le voir sur la Figure 1, chaque organe de rappel élastique 10a-10c comprend deux ressorts, à savoir un ressort extérieur 100a-100c et un ressort intérieur 101a-101c, et une tige axiale 102.

La tige axiale 102 est une tige rigide comportant une tête cylindrique et un corps de tige cylindrique de diamètre inférieur à celui de la tête. La tige 102 est fixée à la paroi de fond 41a du couvercle 41 par l'intermédiaire d'une vis 103 traversant un alésage prévu dans la paroi de fond 41a et vissée dans un alésage prévu dans la tête. En d'autres termes, la tête de la vis 103 est accessible depuis l'extérieur du corps de vanne 4 et la tige filetée de la vis 103 est fixée à la tige 102. L'axe longitudinal de la tige 102 est coaxial à l'axe longitudinal central du logement 46-48. Le diamètre de la tige 102 est inférieur au diamètre intérieur de l'élément de fermeture 9a-9c, de sorte que la tige 102 s'étend à l'intérieur du corps creux de l'élément de fermeture 9a-9c depuis sa seconde extrémité axiale ouverte 91.

Le ressort intérieur 101a-101c est monté autour du corps de la tige 102 et comporte une extrémité en appui sur la tête de la tige 102 et une extrémité en appui sur la paroi interne de l'élément de fermeture 9a-9c. Ce ressort intérieur 101a-101c est du type ressort hélicoïdal de compression qui sollicite l'élément de fermeture 9a-9c vers sa position de repos, autrement dit à l'opposé de la paroi de fond 41a. La tige axiale 102 et le ressort intérieur 101a-101c de chacun des ensembles formant piston 9a-9c, 10a-10c sont de même structure, mais les raideurs des trois ressorts intérieurs 101a-101c pourront être différentes, en fonction des raideurs trois ressorts extérieurs 100a-100c pour obtenir les différentes positions des éléments de fermeture 9a-9c qui vont être décrites ci-après.

Le ressort extérieur 100a-100c est reçu dans l'espace formé entre le ressort intérieur 101a-101c et la paroi interne de l'élément de fermeture 9a-9c, le diamètre extérieur du ressort extérieur 100a-100c étant légèrement inférieur au diamètre intérieur des portées cylindriques 92. Le ressort extérieur 100a-100c est coaxial au ressort intérieur 101a-101c. Le ressort extérieur 100a-100c comporte une extrémité en appui sur la paroi de fond 41a et une extrémité en appui sur la paroi interne de l'élément de fermeture 9a-9c. Ce ressort extérieur 100a-100c est également du type ressort hélicoïdal de compression. Les ressorts extérieurs 100a-100c des trois ensembles formant piston 9a-9c, 10a-10c sont différents, en particulier, ont différentes raideurs. Plus précisément, la raideur du premier ressort extérieur 100a associé à l'élément de fermeture 9a du premier ensemble formant piston 9a, 10a est inférieure à la raideur du deuxième ressort extérieur 100b associé à l'élément de fermeture 9b du deuxième ensemble formant piston 9b, 10b, et la raideur du deuxième ressort extérieur 100b est inférieure à la raideur du troisième ressort extérieur 100c associé à l'élément de fermeture 9c du troisième ensemble formant piston 9c, 10c. Ainsi, l'effort à fournir pour déplacer le premier élément de fermeture 9a à l'encontre de l'organe de rappel élastique 10a associé est moins important que l'effort à fournir pour déplacer le deuxième élément de fermeture 9b à l'encontre de l'organe de rappel élastique 10b associé, lequel est lui-même moins important que l'effort à fournir pour déplacer le troisième élément de fermeture 9c à l'encontre de l'organe de rappel élastique 10c associé.

A titre d'exemple, la raideur du premier ressort extérieur 100a peut être choisie de telle sorte que le premier élément de fermeture 9a se déplace axialement, à l'intérieur du premier logement 46, à l'encontre de l'effort de rappel du ressort extérieur 100a et du ressort intérieur 101a associés lorsqu'une pression de pilotage P1 au moins égale à 1,8 bar est appliquée, à travers le circuit de pilotage 49, sur la première extrémité axiale fermée 90 de cet élément de fermeture 9a. La raideur du deuxième ressort extérieur 100b peut être choisie de telle sorte que le deuxième élément de fermeture 9b se déplace axialement, à l'intérieur du deuxième logement 47, à l'encontre de l'effort de rappel du ressort extérieur 100b et du ressort intérieur 101b associés lorsqu'une pression de pilotage P2 supérieure ou égale 3,4 bars est appliquée, à travers le circuit de pilotage 49, sur la première extrémité axiale fermée 90 de cet élément de fermeture 9b. La raideur du troisième ressort extérieur 100c peut être choisie de telle sorte que le troisième élément de fermeture 9c se déplace axialement, à l'intérieur du troisième logement 48, à l'encontre de l'effort de rappel du ressort extérieur 100c et du ressort intérieur 101c associés lorsqu'une pression de pilotage P3 supérieure ou égale à 6 bars est appliquée, à travers le circuit de pilotage 49, sur la première extrémité axiale fermée 90 de cet élément de fermeture 9c.

En utilisation, lorsqu'aucune pression de pilotage n'est appliquée dans le circuit de pilotage 49, les trois ensembles formant piston 9a-9c, 10a-10c sont sollicités en position de repos par leurs organes de rappel élastique 10a-10c. Dans cette position de repos, comme on peut le voir sur la Figure 2, les ressorts extérieurs 100a-100c et intérieurs 101a-101c sont à l'état détendu et la première extrémité axiale fermée 90 de chaque élément de fermeture 9a-9c est en butée contre le siège radial 94. Les trois passages 43-45 formés entre les orifices 5-8 de la vanne 1 sont alors obturés par les éléments de fermeture 9a-9c.

Lorsque le pneumatique 2 doit être dégonflé, par exemple pour permettre à un véhicule V équipé d'une telle vanne 1 de rouler en terrain sableux, il convient de placer les ensembles formant piston 9a-9c, 10a-10c dans la position de dégonflage, comme représenté sur la Figure 3. Pour cela, une pression de pilotage P1, ici de 1,8 bar, dite première pression de pilotage P1, doit être appliquée via l'orifice d'admission 5, à travers le circuit de pilotage 49. En raison de la raideur du premier ressort extérieur 100a, cette première pression de pilotage P1 provoque le déplacement axial du premier élément de fermeture 9a dans son logement 46 à l'encontre des ressorts 100a, 101a associés, qui se trouvent alors dans un premier état comprimé. Ce déplacement du premier élément de fermeture 9a, de 18 mm dans le sens de la flèche F1, assure la mise en communication fluidique entre l'orifice de gonflage-dégonflage 7 et l'orifice d'échappement 8, et permet donc le dégonflage du pneumatique 2 vers l'extérieur. En raison de la raideur des ressorts 100b, 100c, les deuxième 9b et troisième 9c éléments de fermeture sont maintenus en position de repos, les autres passages 44, 45 entre les orifices restant donc fermés par les deuxième et troisième éléments de fermeture 9b, 9c pendant la phase de dégonflage du pneumatique 2. Lorsque le dégonflage du pneumatique 2 a atteint la limite souhaitée, la première pression de pilotage P1 n'est plus appliquée, et le premier ensemble formant piston 9a, 10a est ramené automatiquement dans sa position de repos selon la Figure 2 par l'organe de rappel élastique 10a associé.

Lorsqu'il convient de gonfler le pneumatique 2, par exemple pour permettre à un véhicule V équipé d'une telle vanne 1 de rouler sur un sol dur, il convient de placer les ensembles formant piston 9a-9c, 10a-10c dans la position de gonflage, comme représenté sur la Figure 4. Pour cela, une pression de pilotage P2, ici de 3,4 bars, dite deuxième pression de pilotage P2, est appliquée via l'orifice d'admission 5 à travers le circuit de pilotage 49, la deuxième pression de pilotage P2 s'appliquant alors simultanément sur les extrémités axiales fermées 90 des trois éléments de fermetures 9a-9c. En raison de la raideur de chacun des ressorts extérieurs 100a-100c, cette deuxième pression de pilotage P2 provoque le déplacement axial du premier élément de fermeture 9a et du deuxième élément de fermeture 9b dans leur logement 46 et 47 respectif à l'encontre des ressorts 100a, 100b, 101a, 101b associés, tandis que le troisième élément de fermeture 9c demeure sollicité vers sa position de repos. Plus précisément, le premier élément de fermeture 9a est ici déplacé de 36 mm dans le sens de la flèche F1, les ressorts 100a, 101a associés se trouvant alors dans un second état comprimé et le premier élément de fermeture 9a obturant l'orifice d'échappement 8, et le deuxième élément de fermeture 9b est ici déplacé de 18 mm dans le sens de la flèche F2, les ressorts 100b, 101b associés se trouvant alors dans un premier état comprimé. Ces déplacements assurent la mise en communication fluidique entre l'orifice de mise en communication avec le réservoir 6 et l'orifice de gonflage-dégonflage 7, et permet donc le gonflage du pneumatique 2 à partir du gaz sous pression contenu dans le réservoir 3. Une fois un seuil de pression de gonflage déterminé atteint dans le pneumatique 2, la deuxième pression de pilotage P2 n'est plus appliquée, de sorte que les premier et deuxième ensembles formant piston sont ramenés automatiquement dans leur position de repos selon la Figure 2 par les organes de rappel élastique 100a, 100b, 101a, 101b associés.

Lorsqu'il convient de remplir le réservoir 3 en gaz sous pression afin de maintenir en permanence le réservoir 3 à une pression élevée déterminée, il convient de placer les ensembles formant piston 9a-9c, 10a-10c dans la position de remplissage, comme représenté sur la Figure 5. Pour cela, une pression de pilotage P3 supérieure ou égale à 6 bars, dite troisième pression de pilotage P3, est appliquée sur les extrémités axiales fermées 90 des trois éléments de fermetures 9a-9c via le circuit de pilotage 49. Cette troisième pression de pilotage P3 élevée provoque le déplacement axial des premier 9a, deuxième 9b et troisième 9c éléments de fermeture dans leur logement 46, 47, 48 respectif à l'encontre des ressorts 100a-100c, 101a-101c associés. Plus précisément, en raison de la raideur de chacun des ressorts extérieurs 100a-100c, les premier 9a et deuxième 9b éléments de fermeture sont déplacés de 36 mm dans le sens de la flèche F1, F2, les ressorts 100a, 100b, 101 associés se trouvant alors dans un second état comprimé. A l'issue de ce déplacement de 36 mm, la seconde extrémité axiale 91 de chacun des premier 9a et deuxième 9b éléments de fermeture se trouve en butée axiale contre la paroi de fond 41a, position dans laquelle le premier élément de fermeture 9a obture l'orifice d'échappement 8 et le second élément de fermeture 9b coupe le passage 44. En d'autres termes, ce déplacement sur une longueur de 36 mm correspond à la course maximale des éléments de fermeture 9a-9b. Le troisième élément de fermeture 9c est déplacé de 18 mm dans le sens de la flèche F3, les ressorts 100c, 101c associés se trouvant alors dans un premier état comprimé. Ces déplacements des trois éléments de fermeture 9a-9c assurent la mise en communication fluidique entre l'orifice d'admission 5 et l'orifice de mise en communication avec le réservoir 6, et permet donc le remplissage du réservoir 3 avec le gaz à ladite première pression de pilotage P1 délivré à travers l'orifice d'admission 5. Les autres passages 43, 44 entre les orifices restent fermés pendant la phase de remplissage du réservoir 3. Une fois un seuil de pression de remplissage déterminé atteint dans le réservoir 3, la troisième pression de pilotage P3 n'est plus appliquée, de sorte que les trois ensembles formant piston sont ramenés automatiquement dans leur position de repos selon la Figure 2 par les organes de rappel élastique 100a-100c, 101a-101c associés.

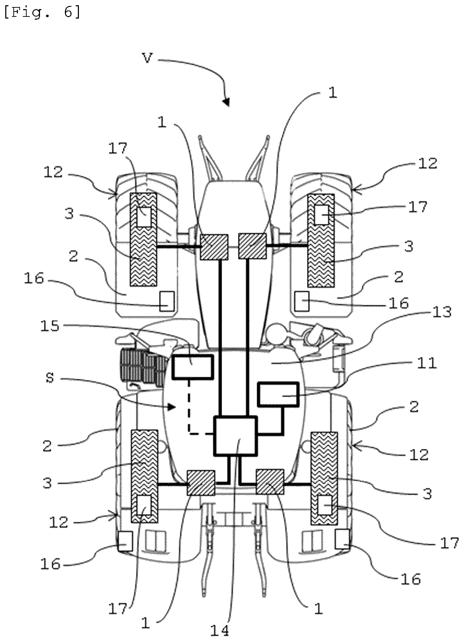

La vanne 1 selon la présente invention est destinée à être utilisée dans un véhicule V, comme représenté schématiquement sur la Figure 6. Ce véhicule V est notamment un véhicule destiné à rouler sur des sols présentant des conditions de roulement différentes les unes des autres, par exemple un tracteur. Toutefois, bien que le véhicule automobile V représenté sur la Figure 6 est un véhicule agricole, ce véhicule pourrait être tout véhicule comprenant au moins une roue 12 apte à être gonflée et un réservoir 3 apte à contenir un gaz sous pression associé à ladite roue 12.

En référence à la Figure 6, le véhicule V comprend un châssis supportant une cabine de pilotage 13, quatre roues 12, quatre réservoirs 3 de gaz sous pression et un système de télégonflage S.

Chaque roue 12, à savoir les deux roues avant et les deux roues arrière, comporte un pneumatique 2 définissant un volume intérieur destiné à contenir du gaz sous pression.

Un réservoir 3 apte à stocker un gaz sous pression, par exemple de l'air comprimé, est embarqué dans chaque roue 12. L'agencement du réservoir 3 pourra être analogue à celui décrit dans le brevet français FR3086577.

Dans le mode de réalisation représenté sur la Figure 6, le système de télégonflage S permet de faire varier la pression dans le volume intérieur des pneumatiques 2 de chacune des quatre roues 12 du véhicule V. En variante, le système de télégonflage S pourrait permettre de faire varier la pression dans les pneumatiques 2 d'une partie des roues 12, voire d'une seule roue 12.

Le système de télégonflage S comprend une source de pression 11, un module de pilotage 14, 15, et pour chaque roue 12, une unique vanne 1 selon la présente invention et des premier et second capteurs de pression 16, 17.

La source de pression 11 est, de préférence, un compresseur porté par le véhicule V. Ce compresseur 11 est relié au module de pilotage 14, 15 afin de délivrer, sur commande du module de pilotage 14, 15, un flux de gaz sous pression, notamment un flux d'air comprimé, à travers une ligne pneumatique reliée fluidiquement à l'orifice d'admission 5 de chaque vanne 1.

Chaque vanne 1 selon l'invention, en plus d'être reliée au compresseur 11, est reliée fluidiquement au volume intérieur du pneumatique 2 associé via une ligne pneumatique reliant le volume intérieur du pneumatique 2 à son orifice de gonflage-dégonflage 7, est reliée à l'extérieur via son orifice d'échappement 8, et est reliée au réservoir 3 associé via une ligne pneumatique reliant le réservoir 3 à son orifice de mise en communication avec le réservoir 6. Chaque vanne 1 est pilotée de manière pneumatique par le module de pilotage 14, 15.

Le module de pilotage 14, 15 comprend un boîtier de distribution électropneumatique 14 et un pupitre de commande 15. Le pupitre de commande 15 est positionné dans la cabine de pilotage 13 du véhicule V de manière à pouvoir être commandé directement par le conducteur du véhicule V, en particulier tandis que le véhicule V est en circulation. Ce pupitre de commande 15 est relié, par exemple par une liaison filaire, au boîtier de distribution électropneumatique 14, lui-même relié à chacune des vannes 1. Ainsi, les vannes 1 peuvent être pilotées à distance, depuis la cabine de pilotage 13. Le pilotage des vannes 1 est aisé et rapide, le conducteur devant simplement entrer la valeur de la pression de pilotage à appliquer à chaque vanne 1. En fonction de la pression de pilotage appliquée, à savoir soit aucune pression de pilotage, soit la première P1, deuxième P2 ou troisième P3 pression de pilotage, chaque vanne 1 change de configuration et adopte l'une de ses quatre positions, comme représenté sur les Figures 2 à 5.

Pour chaque roue 12, le premier capteur de pression 16 est monté au niveau du pneumatique 2 de façon à mesurer une pression dans le volume intérieur du pneumatique 2, et le second capteur de pression 17 est monté au niveau du réservoir 3 de façon à mesurer une pression dans le réservoir 3. Les données de mesure de pression mesurées par ces capteurs 16, 17 sont transmises au pupitre de commande 15, par une liaison filaire ou sans fil. Ainsi, le pilotage de chaque vanne 1 peut être réalisé de manière simple et rapide à partir d'une comparaison de la pression dans le pneumatique 2 avec une valeur de pression de pneumatique souhaitée et d'une comparaison de la pression dans le réservoir 3 avec une valeur de pression de réservoir souhaitée.

Il est bien entendu que le mode de réalisation particulier qui vient d'être décrit a été donné à titre indicatif et non limitatif, et que des modifications peuvent être apportées sans que l'on s'écarte pour autant de la présente invention.

## Revendications

1. Vanne (1) perfectionnée pour le télégonflage d'un pneumatique (2) d'une roue (12) de véhicule (V), un réservoir (3) apte à stocker un gaz sous pression étant embarqué dans la roue (12), la vanne (1) étant destinée à être interposée entre une source de pression (11) apte à générer une pression de pilotage (P1, P2, P3) et la roue (12), la vanne (1) comportant quatre orifices (5-8), à savoir un orifice d'admission (5) de la pression de pilotage (P1-P3) destiné à être relié à la source de pression (11), un orifice de gonflage-dégonflage (7) destiné à être relié au volume intérieur du pneumatique (2), un orifice d'échappement (8) destiné à être relié à l'extérieur de la vanne (1) et un orifice de mise en communication avec le réservoir (6) destiné à être relié au réservoir (3), la vanne (1) comprenant, dans un corps (4) muni desdits quatre orifices (5-8), des moyens de pilotage sensibles à la pression (9a-9c, 10a-10c, 49) configurés et agencés pour être aptes à être déplacés sous l'effet de la pression de pilotage (P1-P3) de façon à adopter :
- une position de repos dans laquelle les moyens de pilotage assurent une obturation des passages (43-45) entre lesdits orifices (5-8) ;
- une position de gonflage dans laquelle lesdits moyens de pilotage assurent une mise en communication entre l'orifice de mise en communication avec le réservoir (6) et l'orifice de gonflage-dégonflage (7) ;
- une position de dégonflage dans laquelle lesdits moyens de pilotage assurent une mise en communication entre l'orifice de gonflage-dégonflage (7) et l'orifice d'échappement (8) ;
**caractérisée par le fait que** lesdits moyens de pilotage sensibles à la pression sont également configurés et agencés pour adopter une position de remplissage de réservoir dans laquelle lesdits moyens de pilotage assurent une mise en communication entre l'orifice d'admission (5) et l'orifice de mise en communication avec le réservoir (6).

2. Vanne (1) selon la revendication 1, **caractérisée par le fait que** les moyens de pilotage (9a-9c, 10a-10c, 49) comprennent des premier (9a, 10a), deuxième (9b, 10b) et troisième (9c, 10c) ensembles formant piston, chaque ensemble formant piston étant mobile axialement dans un logement (46-48) en communication fluidique avec l'orifice d'admission (5) de la pression de pilotage via un circuit de pilotage (49) reliant successivement chaque logement (46-48) audit orifice d'admission (5), les premier (9a, 10a), deuxième (9b, 10b) et troisième (9c, 10c) ensembles formant piston étant sensibles, respectivement, à une première (P1), deuxième (P2) et troisième (P3) pressions de pilotage, la première pression de pilotage (P1) étant inférieure à la deuxième pression de pilotage (P2) et la deuxième pression de pilotage (P2) étant inférieure à la troisième pression de pilotage (P3).

3. Vanne (1) selon la revendication 2, **caractérisée par le fait que** les premier (9a, 10a), deuxième (9b, 10b) et troisième (9c, 10c) ensembles formant piston sont configurés et agencés de telle sorte que, en utilisation, lorsque la première pression de pilotage (P1) est délivrée à travers l'orifice d'admission (5), les ensembles formant piston sont placés dans la position de dégonflage, lorsque la deuxième pression de pilotage (P2) est délivrée à travers l'orifice d'admission (5), les ensembles formant piston sont placés dans la position de gonflage, et lorsque la troisième pression de pilotage (P3) est délivrée à travers l'orifice d'admission (5), les ensembles formant piston sont placés dans la position de remplissage, la troisième pression de pilotage (P3) étant la pression de remplissage du réservoir (3) .

4. Vanne (1) selon l'une quelconque des revendications 2 et 3, **caractérisée par le fait que** chaque ensemble formant piston (9a-9c, 10a-10c) comprend un élément de fermeture (9a-9c) ayant une première extrémité axiale fermée (90), côté circuit de pilotage (49), et une seconde extrémité axiale ouverte (91) opposée, et un organe de rappel élastique (10a-10c) solidaire du corps (4), côté seconde extrémité axiale (91), et de l'élément de fermeture (9a-9c), ledit organe de rappel élastique (10a-10c) étant associé fonctionnellement à l'élément de fermeture (9a-9c) de manière à le rappeler vers la position de repos, la raideur de l'organe de rappel élastique (10a) du premier ensemble formant piston, dite première raideur, étant inférieure à la raideur de l'organe de rappel élastique (10b) du deuxième ensemble formant piston, dite deuxième raideur, et la deuxième raideur étant inférieure à la raideur de l'organe de rappel élastique (10c) du troisième ensemble formant piston, dite troisième raideur.

5. Vanne (1) selon la revendication 4, **caractérisée par le fait que** les première, deuxième et troisième raideurs sont choisies de telle sorte que la première pression de pilotage (P1) est d'environ 1,8 bar, la deuxième pression de pilotage (P2) est d'environ 3,4 bars et la troisième pression de pilotage (P3) est supérieure ou égale à 6 bars.

6. Vanne (1) selon l'une quelconque des revendications 4 et 5, **caractérisée par le fait que** chaque organe de rappel élastique (10a-10c) comporte deux ressorts concentriques et coaxiaux, dont un ressort extérieur (100a-100c) et un ressort intérieur (101a-101c), les raideurs des premier (100a), deuxième (100b) et troisième (100c) ressorts extérieurs étant différentes et les raideurs des premier (101a), deuxième (101b) et troisième (101c) ressorts intérieurs étant différentes.

7. Vanne (1) selon l'une quelconque des revendications 1 à 6, **caractérisée par le fait que** le corps de vanne (4) est un corps en au moins deux parties comprenant un boîtier (40) et un couvercle (41) fixé de manière détachable au boîtier (40) par des organes de fixation amovible (42), notamment des vis.

8. Véhicule (V) automobile comprenant :
- au moins une roue (12) comportant un pneumatique (2) définissant un volume intérieur,
- pour la ou chaque roue (12), un réservoir (3) apte à stocker un gaz sous pression, et
- un système de télégonflage (S) comprenant une source de pression (11) portée par le véhicule (V),
**caractérisé par la fait que** le système de télégonflage (S) comprend en outre, pour la ou chaque roue (12), une unique vanne (1) selon l'une quelconque des revendications 1 à 7, dans laquelle vanne (1) l'orifice d'admission (5) est relié à la source de pression (11), l'orifice de gonflage-dégonflage (7) est relié au volume intérieur du pneumatique (2), l'orifice d'échappement (8) est relié à l'extérieur de la vanne (1) et l'orifice de mise en communication avec le réservoir (6) est relié au réservoir (3), le système de télégonflage (S) comprenant en outre un module de pilotage (14, 15) couplé à la ou chaque vanne (1) et à la source de pression (11).

9. Véhicule (V) selon la revendication 8, **caractérisé par le fait que** le module de pilotage (14, 15) comprend un boîtier de distribution électropneumatique (14) relié à un pupitre de commande (15).

10. Véhicule (V) selon l'une quelconque des revendications 8 et 9, **caractérisé par le fait que** le système de télégonflage (S) comprend en outre, pour la ou chaque roue (12), un premier capteur de pression (16) propre à mesurer une pression dans le volume intérieur du pneumatique (2) et un second capteur de pression (17) propre à mesurer une pression dans le réservoir (3).
